# EUROPEAN PATENT APPLICATION

(11) **EP 4 215 101 A1**
(43) Date of publication of application: **26.07.2023**
(21) Application number: 22213905.7
(22) Date of filing: 15.12.2022
(51) Int. Cl.: A47L 15/42, B01J 49/75, C02F 1/42

(54) **WATER SOFTENER FOR A PLUMBING SYSTEM**

(30) Priority: 21.01.2022 IT 202200000239 U
(71) Applicant: ACQUA BREVETTI S.R.L., 35035 Mestrino (PD) (IT)
(72) Inventor: BARBIERI, Graziano, 35035 MESTRINO PD (IT)
(74) Representative: Modiano, Micaela Nadia

(57) **Abstract**

A water softener (10) for a plumbing system, comprising:
- a container (11) closed in an upper region by a lid (12),
- an ion-exchange cylinder (13) inside the container (11), suitable to be connected fluidically:
- to a first inlet duct (14), for the water that arrives from the plumbing system,
- to a second outlet duct (15), for the water that arrives from the plumbing system.

The lid (12) has a compartment (16) for accommodating a scale remover and/or anticorrosive and/or disinfectant substance adapted to be dosed by a dosage pump (18).

## Description

The present invention relates to a water softener for a plumbing system.

The invention is used in the industrial and domestic sector, in the field of devices for water treatment in plumbing systems.

Currently, water arriving from the water mains of industrial and domestic users may have an excessive concentration of calcium and magnesium salts, resulting in excessive hardness thereof.

In the present description, "water hardness" is understood as a value expressing the total content of calcium and magnesium ions, due to the presence of soluble salts in the water, and of any heavy metals present in the water.

Due to water hardness, plumbing systems for heating and sanitary water supply are subject to the danger of scaling and corrosion due to the presence of these salts, which can precipitate to form scale deposits, which in turn cause damage to boilers, kettles, system pipes and other appliances that require water from the water mains for their operation.

For these reasons, it is now customary to introduce in plumbing systems substances adapted to achieve the suspension of calcium and magnesium salts and/or softeners that facilitate the removal of the ions that cause water to be hard.

A softener is an exchanger of specific ions, designed to remove calcium and magnesium ions from the incoming water and replace them with other types of ions, e.g., sodium and potassium ions, in the outgoing water.

The softener comprises a container inside which there is a bed of cationic resins.

Hard water from the water mains enters said container on one side, passes through the resin bed, and exits as softened water on the other side.

The resins act as ion exchange material.

In practice, the resins have a negative charge, while the calcium and magnesium ions, dissolved in the incoming water, have a positive charge instead.

The water flow of the system passes through the softener, and as the water passes through, the resins attract and become charged with the calcium and magnesium ions while releasing sodium ions.

This process leads to a gradual depletion of the exchange power of the resins, necessitating regeneration with sodium chloride in an aqueous solution (brine).

The brine solution is generally contained in a container from which, through a programmable valve, the system draws it to regenerate the resins through a reverse process: thanks to the passage of the brine, constituted by sodium chloride, i.e., chloride and sodium ions, the resins are recharged with the sodium they had exchanged previously and return to operate again.

Moreover, in order to protect the plumbing system from scale and corrosion and to prevent the forming of molds and bacterial colonies, the use of a dosage pump adapted to dose and introduce an anticorrosive and/or scale remover and/or disinfectant substance in the system is known and widespread.

Such dosage pump includes an inlet for the water that arrives from the system and an outlet for its reintroduction therein, and a tank for drawing the anticorrosive and/or scale remover and/or disinfectant substance.

Such device is a volumetric pump that introduces in the outgoing water a certain amount of anticorrosive and/or scale remover and/or disinfectant substance in proportion to the water flow rate detected at the inlet.

Usually, the dosage pump is installed proximate to or at the boiler or proximate to the water softener.

This background art has some disadvantages.

First of all, usually the dosage pump and the softener are separate elements and are installed in different points of the system, and this leads to a considerable overall footprint as well as an unpleasant visual impact.

Moreover, the dosage pump tank must be refilled periodically with the anticorrosive and/or scale remover and/or disinfectant substance, but often the dosage pump is installed in cramped or hard-to-reach spaces and it is awkward to operate on its tank.

The aim of the present invention is to provide a water softener for a plumbing system that is capable of overcoming the drawbacks of the background art in one or more of the above cited aspects.

Within this aim, an object of the invention is to provide a water softener for a plumbing system that allows to reduce the overall footprint with respect to similar systems with softeners and dosage pumps of a known type.

Another object of the invention is to provide a water softener that allows an easy and rapid operation for refilling the dosage pump tank.

A further object of the present invention is to provide a water softener that overcomes the drawbacks of the background art in a manner that is alternative to any existing solutions.

Not least object of the invention is to provide a water softener for a plumbing system that is highly reliable, relatively easy to provide and at competitive costs.

This aim, as well as these and other objects that will become better apparent hereinafter, are achieved by a water softener for a plumbing system, comprising:
- a container closed in an upper region by a lid,
- an ion-exchange cylinder inside said container, suitable to be connected fluidically:
   - to a first inlet duct, for the water that arrives from said plumbing system,
   - to a second outlet duct, for the water that arrives from said plumbing system,
said water softener being characterized in that said lid has a compartment for accommodating a scale remover and/or anticorrosive and/or disinfectant substance adapted to be dosed by a dosage pump.

Further characteristics and advantages of the invention will become better apparent from the description of a preferred but not exclusive embodiment of the water softener according to the invention, illustrated by way of non-limiting example in the accompanying drawings, wherein:

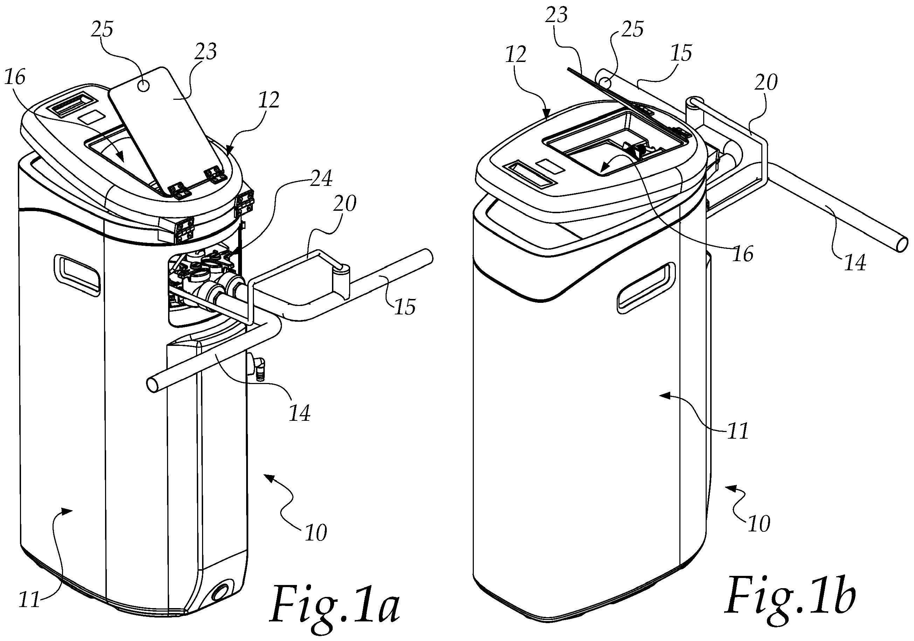

Figure 1a is a first general perspective view of a water softener according to the invention, in a partially open configuration;
Figure 1b is a second general perspective view of a water softener according to the invention, in a partially open configuration;

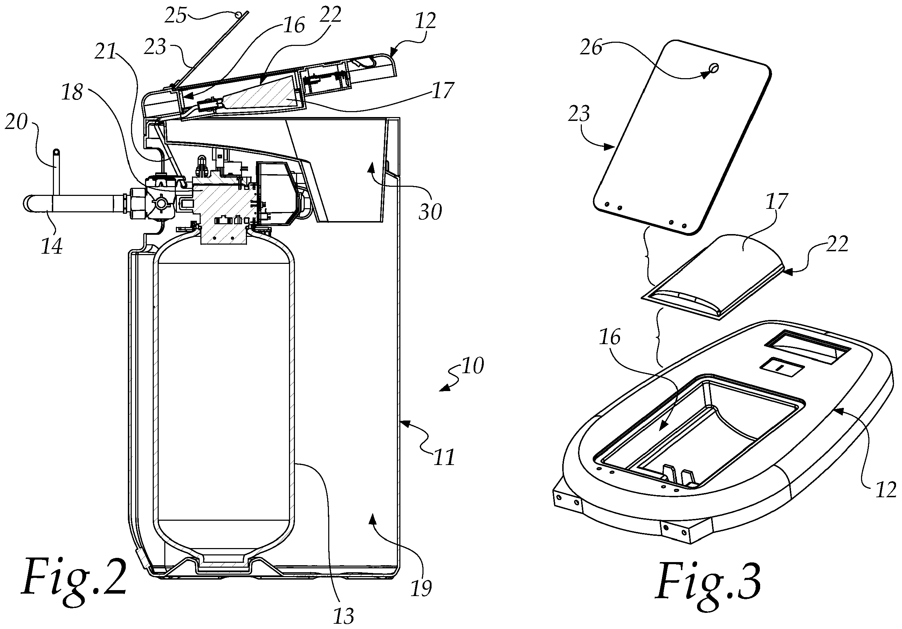

Figure 2 is a sectional view of the water softener according to the invention, in the same configuration as Figures 1a and 1b,
Figure 3 is an exploded view of a portion of the water softener according to the invention.

With reference to the figures, a water softener according to the invention is generally designated by the reference numeral 10.

The water softener 10 comprises:
- a substantially cylindrical vertically extended container 11, closed in an upper region by a lid 12,
- an ion exchange cylinder 13 inside the container 11, fluidically connected:
- to a first duct inlet 14, for the water that arrives from the plumbing system, not shown in the figures,
- to a second outlet duct 15, for the water that arrives from the plumbing system.

The cylinder 13 contains a bed of cationic resins and is fluidically connected to the first duct 14 and to the second duct 15 through a lateral opening 24 that is present on the container 11.

The container 11 and the lid 12 are made of plastic material.

The lid 12 has a compartment 16 for accommodating a scale remover and/or anti-corrosive and/or disinfectant substance 17 adapted to be dosed by a dosage pump 18.

Inside the container 11 there is also a vessel 19 for containing brine, not shown in the figures, in controlled fluidic connection with the cylinder 13.

The vessel 19 and the cylinder 13 are appropriately connected in a per se known manner by means of a valve and a brine suction tube, which are not shown in the figures.

The water softener 10 comprises a hopper-like body 30 for loading salt for the brine in the vessel 19, located below the lid 12.

Such dosage pump 18 is also present inside the container 11 and is thus integrated into the water softener 10.

Said dosage pump 18 is located above the cylinder 13 and is interposed between the cylinder 13 and the lid 12.

In particular, the dosage pump 18 is interposed between the hopper-like body 30 and the cylinder 13.

Such dosage pump 18 is adapted to dose the scale remover and/or anticorrosive and/or disinfectant substance 17 to be injected into the plumbing system at the outlet of the softened water, therefore in the second duct 15, downstream of a flow meter, not shown in the figures, by means of an injection duct 20.

Advantageously, the dosage pump 18 is an electric volumetric pump, driven by an electric stepper motor with variable flow rate, proportional to the frequency of the pulses sent by a Hall-effect sensor of the flow meter.

Control is performed by an electronic unit, not shown in the figures, which manages the entire operation of the softener and of the dosage pump 18.

The compartment 16 of the lid 12 is in fluidic connection with the dosage pump 18 by means of a connecting duct 21.

The scale remover and/or anticorrosive and/or disinfectant substance 17 is preferably in liquid form and contained in a bag 22 which is accommodated inside the compartment 16 and connected to the dosage pump 18 via the connecting duct 21.

Another particularity of the invention resides in that the lid 12 comprises a door 23 for access to the compartment 16.

The door 23 allows, when closed, to hide the bag 22 completely inside the lid 12, closing it inside the compartment 16.

This reduces the overall footprint of the softener with respect to similar systems with softeners and dosage pumps of the known type and results in a more pleasant visual impact with respect to the latter.

The door 23 is made of plastic material and is provided with a grip knob 25.

The knob 25 is fixed to the door 23 by means of a screw and/or pin, not shown in the figures, which is inserted in a corresponding through hole 26 of the door 23.

The lid 12 is hinged to the container 11, on the same side of fluidic connection with the first duct 14 and the second duct 15, thus proximate to/at the opening 24.

The door 23 is hinged to the lid 12 proximate to the region where the latter is hinged to container 11.

It should be noted that the presence of such a door 23 allows quick and easy replacement of the bag 22 if needed.

In practice it has been found that the invention achieves the intended aim and objects, providing a water softener for a plumbing system that allows to reduce the overall footprint with respect to similar systems with softeners and dosage pumps of the known type while giving it a pleasant visual impact.

The invention provides a water softener that allows an easy and rapid operation for refilling the dosage pump tank.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Utility Model Application No. 202022000000239 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A water softener (10) for a plumbing system, comprising:
- a container (11) closed in an upper region by a lid (12),
- an ion-exchange cylinder (13) inside said container (11), suitable to be connected fluidically:
- to a first inlet duct (14), for the water that arrives from said plumbing system,
- to a second outlet duct (15), for the water that arrives from said plumbing system,
said water softener (10) being **characterized in that** said lid (12) has a compartment (16) for accommodating a scale remover and/or anticorrosive and/or disinfectant substance adapted to be dosed by a dosage pump (18).

2. The water softener (10) according to claim 1, **characterized in that** said lid (12) comprises a door (23) for access to said compartment (16).

3. The water softener (10), according to one or more of the preceding claims, **characterized in that** said door (23) is provided with a grip knob (25).

4. The water softener (10) according to one or more of the preceding claims, **characterized in that** a vessel (19) for containing brine, in controlled fluidic connection with said cylinder (13), is formed within said container (11), said vessel (19) and said cylinder (13) being connected by means of a valve and a suction tube.

5. The water softener (10), according to one or more of the preceding claims, **characterized in that** it comprises said dosage pump (18) inside said container (11).

6. The water softener (10) according to one or more of the preceding claims, **characterized in that** said dosage pump (18) is positioned above said cylinder (13) and is interposed between said cylinder (13) and said lid (12).

7. The water softener (10) according to one or more of the preceding claims, **characterized in that** said compartment (16) of said lid (12) is in fluidic connection with said dosage pump (18) by means of a connecting duct (21).

8. The water softener (10) according to one or more of the preceding claims, **characterized in that** said scale remover and/or anticorrosive and/or disinfectant substance (17) is in liquid form and is contained in a bag (22) accommodated within said compartment (16), said bag (22) being connected to said dosage pump (18) by means of said connecting duct (21).

9. The water softener (10) according to one or more of the preceding claims, **characterized in that** said lid (12) is hinged to said container (11), on the same side for fluidic connection with said first duct (14) and said second duct (15).

10. The water softener (10) according to one or more of the preceding claims, **characterized in that** said door (23) is hinged to said lid (12) proximate to the hinging region of said lid (12) to said container (11).
